# EUROPÄISCHE PATENTSCHRIFT

(11) **EP 3 739 500 B1**
(45) Veröffentlichungstag und Bekanntmachung des Hinweises auf die Patenterteilung: **02.11.2022**
(21) Anmeldenummer: 19174105.7
(22) Anmeldetag: 13.05.2019
(51) Int. Cl.: G06K 7/00, H05K 1/02, G06F 21/86

(54) **MANIPULATIONSSICHERER KARTENLESER MIT EINER VERKLEBTEN MEHRSCHICHTIGEN SCHUTZHAUBE**
TAMPER-PROOF CARD READER WITH A BONDED MULTILAYER PROTECTIVE HOOD
LECTEUR DE CARTES À MANIPULATION SÉCURISÉE DOTÉ D'UN CAPOT DE PROTECTION MULTICOUCHE COLLÉ

(43) Veröffentlichungstag der Anmeldung: 18.11.2020
(73) Patentinhaber: ddm hopt + schuler GmbH & Co. KG., 78628 Rottweil (DE)
(72) Erfinder: Hopt, Karl-Rudolf, 78628 Rottweil (DE)
(74) Vertreter: Kohler Schmid Möbus Patentanwälte

(56) Entgegenhaltungen:
- EP-A1- 1 054 316
- EP-A1- 1 785 911
- EP-A1- 3 196 799
- DE-A1-102010 003 655
- DE-A1-102012 203 474
- DE-B3-102009 026 466
- JP-A- H1 131 353
- US-A1- 2012 062 241

## Beschreibung

Die vorliegende Erfindung betrifft eine Schutzhaube für einen Kartenleser gemäß Oberbegriff des Anspruchs 1 sowie auch einen Kartenleser mit einer solchen Schutzhaube.

Eine derartige Schutzhaube ist beispielsweise durch die DE 10 2010 003 655 A1 bekannt geworden. Diese bekannte Schutzhaube weist eine Datenplatine, einen Distanzrahmen, ein metallisches Spannblech und eine zwischen Distanzrahmen und Spannblech angeordnete, mehrlagige Bohrschutzplatine auf, wobei das metallische Spannblech auf der Bohrschutzplatine angeordnet ist. In jeder der Lagen der Bohrschutzplatine verlaufen unterschiedlich ausgerichtete und angeordnete Leiterbahnen. Kontaktflächen der Bohrschutzplatine, des Distanzrahmens sowie der Datenplatine werden durch das Anziehen von Schrauben aufeinandergepresst, so dass die Widerstandelemente einer jeden Lage und der Datenplatine zusammengeschlossen sind und von einer auf der Datenplatine befindlichen Sensoreinheit auf Widerstandveränderungen überwacht werden können.

Aus der DE 10 2009 026 466 B3 ist weiterhin ein Kartenleser bekannt, der ein Kunststoffspritzteil in Form einer Schutzhaube mit einer daran vorgesehenen Bohrschutz-Leiterbahnstruktur aufweist. Die Schutzhaube ist ein spritzgegossenes Kunststoffteil, dessen Innenseite eine metallisierte Mäander-Leiterbahnstruktur als Bohrschutz aufweist. Dazu wurde auf die Innenseite vollflächig bzw. flächendeckend mit einem Laser eine Mäanderbahnstruktur (ca. 0,15 mm Bahnbreite) im Abstand von ca. 0,25 mm abgetragen. Nach dieser Laserstrukturierung wurde das Kunststoffteil metallisiert. Durch die nun metallisierte Bohrschutz-Leiterbahnstruktur ist auf der gesamten Innenseite zwischen zwei Anschlusskontakten eine durchgehende elektrische Leiterbahn gelegt. Wenn die Schutzhaube zu Manipulationszwecken durchbohrt oder abgeschliffen wird, wird dabei auch die durchgehende Leiterbahn durchtrennt, über die im Betrieb ein Strom fließt. Dies wird von einer Überwachungseinheit erkannt, die dann keinen Lesevorgang mehr zulässt bzw. den Kartenleser außer Funktion setzt. Allerdings sind die Laserstrukturierung und die anschließende Metallisierung aufwändig und somit auch mit entsprechenden Kosten verbunden.

Es ist demgegenüber die Aufgabe der vorliegenden Erfindung, eine Schutzhaube für einen Kartenleser anzugeben, die mit geringerem Aufwand und mit geringeren Kosten bereitgestellt werden kann, sowie auch einen Kartenleser mit einer solchen Schutzhaube anzugeben.

Diese Aufgabe wird erfindungsgemäß durch eine Schutzhaube mit den Merkmalen von Anspruch 1 und durch einen Kartenleser mit den Merkmalen von Anspruch 8 gelöst.

Erfindungsgemäß ist die Schutzhaube vollflächig sowohl an die Innenseite der äußeren Blechhaube als auch an die Außenseite der inneren Blechhaube angeklebt, um so einen verklebten, unlösbaren, mehrschichtigen Deckelverbund auszubilden. Wenn zu Manipulationszwecken die Schutzhaube durchbohrt wird, wird dadurch zwangsläufig die bis dahin durchgehende Bohrschutz-Leiterbahn bzw. die bis dahin geschlossene Bohrschutz-Leiterbahnstruktur unterbrochen. Diese Stromkreisunterbrechung wird von einer Überwachungseinheit erkannt, die dann keinen Lesevorgang mehr zulässt bzw. die Kontaktiereinheit außer Funktion setzt.

Vorzugsweise sind die Blechhauben jeweils als ein Tiefziehteil oder ein Blechbiegeteil ausgebildet.

Die Bohrschutzfolie weist bevorzugt eine aus der Schutzhaube hervorstehende Anschlussfahne auf, die innerhalb der Schutzhaube mit dem Kontaktträger elektrisch verbunden ist. Eine Unterbrechung der Bohrschutz-Leiterbahnstruktur kann über den Kontaktträger an die Überwachungseinheit auf einer Leiterplatte weitergeleitet werden, auf der der Kartenleser montiert ist.

Bevorzugt weisen die beiden Blechhauben jeweils Füße zur Befestigung auf einer Leiterplatte auf, wobei die Füße der äußeren Blechhaube die Füße der inneren Blechhaube jeweils vollständig übergreifen.

Besonders bevorzugt ist vorgesehen, dass der Kartenleser auf einer Leiterplatte montiert ist und dass elektrische Anschlusskontakte der Schutzhaube von entsprechenden Gegenkontakten der Leiterplatte elektrisch kontaktiert sind. Wenn zu Manipulationszwecken die Schutzhaube von der Leiterplatte abgehoben wird, wird dadurch zwangsläufig der elektrische Kontakt zwischen Anschlusskontakten und Leiterplatte unterbrochen und folglich der bis dahin geschlossene Stromkreis unterbrochen. Auch dies wird von der Überwachungseinheit erkannt, die dann keinen Lesevorgang mehr zulässt bzw. die Kontaktiereinheit außer Funktion setzt.

In einer vorteilhaften Weiterbildung sind die Anschlusskontakte durch Laschen gebildet, die in der Standfläche der Füße der inneren Blechhaube ausgespart sind und über die Standfläche vorstehen.

Die Bohrschutzfolie kann eine einlagige oder eine mehrlagige Bohrschutz-Leiterbahnstruktur aufweisen.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fign. 1a, 1b: den erfindungsgemäßen Kartenleser mit einer Schutzhaube in einer perspektivischen Ansicht von oben (Fig. 1a) und von unten Fig. 1b);
- Fig. 2: die aus zwei ineinander gestapelten Blechhauben zusammengesetzte Schutzhaube in einer Detailansicht gemäß Il in Fig. 1a;
- Fign. 3a, 3b: eine zwischen den zwei Blechhauben verklebte Bohrschutzfolie in einer Draufsicht (Fig. 3a) und in einem Längsschnitt (Fig. 3b);
- Fig. 4: einen Fuß der inneren Blechhaube in einer Detailansicht;
- Fig. 5: den auf einer Leiterplatte montierten Kartenleser, wobei die Schutzhaube abgebrochen dargestellt ist;
- Fig. 6: den Bereich der Leiterplatte, auf dem die Schutzhaube mit den Füßen ihrer beiden Blechhauben steht; und
- Fig. 7: die Leiterplatte mit montierter Schutzhaube im Bereich einer Anschlussfahne der Schutzhaube in einer Schnittansicht.

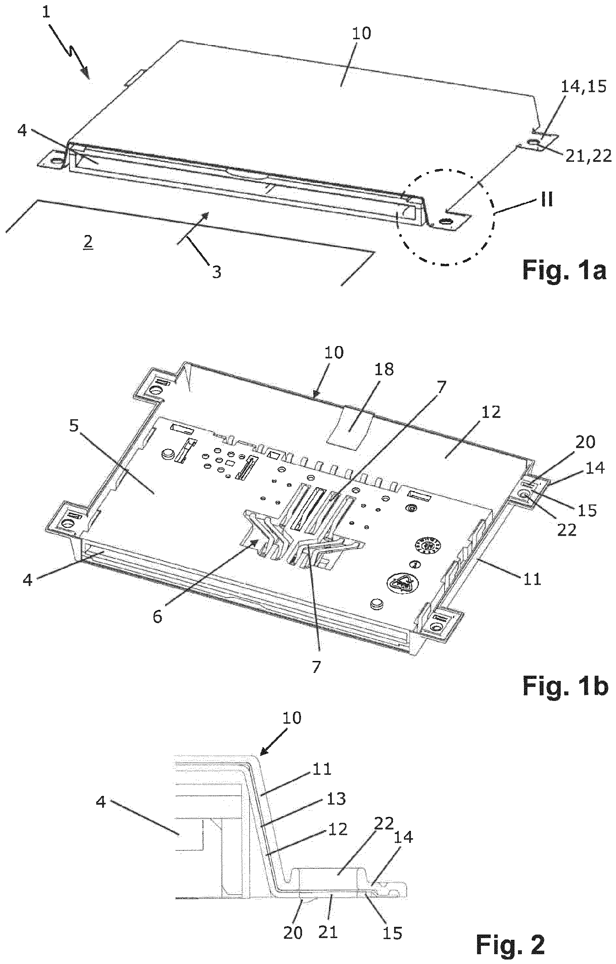

Der in **Fign. 1a, 1b** gezeigte Kartenleser **1** ist ein so genannter Push/Pull-Kartenleser, bei dem eine Chipkarte **2** durch den Benutzer in Einführrichtung **3** über eine Karteneinführöffnung **4** in den Kartenleser 1 bis in die Datenaustauschposition eingeführt und nach dem Datenaustausch vom Benutzer wieder aus dem Kartenleser 1 herausgezogen wird. Die Chipkarte 2 trägt zum Speichern von Daten einen Mikrochip (nicht gezeigt), dessen Kontakte als elektrische Kontaktfelder (nicht gezeigt) auf der Kartenoberfläche vorgesehen sind.

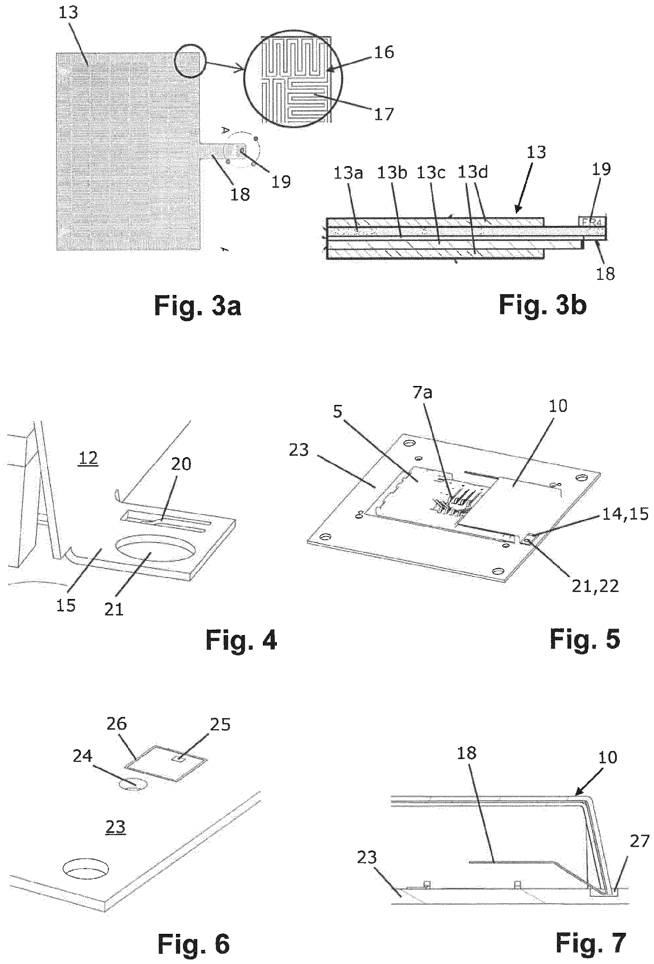

Der Kartenleser 1 weist einen Kontaktträger **5** mit einer Kontaktiereinheit **6** zum Datenaustausch mit der durch die Karteneinführöffnung 4 eingeführten Chipkarte 2 auf. Die Kontaktiereinheit 6 umfasst mehrere elastisch verformbare Kontaktfedern **7,** die mit ihren freien Kontaktenden **7a** (Fig. 5) in die Kartenbahn hineinragen. Durch die eingeführte Chipkarte 2 werden die freien Kontaktenden 7a aus der Kartenbahn ausgelenkt und kontaktieren die elektrischen Kontaktfelder der Chipkarte 2. Bis auf die Karteneinführöffnung 4 ist der Kontaktträger 5 von einer Schutzhaube **10** abgedeckt.

Wie in **Fig. 2** gezeigt, ist die Schutzhaube 10 aus zwei ineinander gestapelten, wannenförmigen Blechhauben **11**, **12** und aus einer dazwischen angeordneten, biegsamen Bohrschutzfolie **13** gebildet. Bei der äußeren Blechhaube 11 kann es beispielsweise um ein Tiefziehteil und bei der inneren Blechhaube 12 um ein Blechbiegeteil handeln. Über Klebeschichten **13d** (Fig. 3b) an ihren beiden Außenseiten ist die Bohrschutzfolie 13 vollflächig sowohl an die Innenseite der äußeren Blechhaube 11 als auch an die Außenseite der inneren Blechhaube 12 angeklebt, um so einen verklebten, unlösbaren Deckelverbund auszubilden. Die Klebeschichten 14 können beispielsweise jeweils durch ein doppelseitiges Klebeband gebildet sein. Die beiden Blechhauben 11, 12 weisen jeweils vier Füße **14**, **15** auf, wobei die Füße 14 der äußeren Blechhaube 11 die Füße 15 der inneren Blechhaube 12 jeweils vollständig abdecken bzw. übergreifen.

Wie in **Fig. 3a** gezeigt, weist die Bohrschutzfolie 13 flächendeckend eine Bohrschutz-Leiterbahnstruktur **16** in Form von zwei durchgehenden, mäanderförmigen Bohrschutz-Leiterbahnen **17** auf, deren Linienbreite höchstens 0,2 mm und deren Linienabstand zueinander höchstens 0,3 mm beträgt. Die Leiterbahnen 17 enden auf einer biegsamen Anschlussfahne **18** der Bohrschutzfolie 13 in vier freiliegenden, elektrischen Kontaktflächen (Pads) **19**. Wie in **Fig. 3b** gezeigt, ist die Bohrschutzfolie 13 mehrschichtig aus einer Trägerfolie **13a**, einer darauf aufgebrachten Leiterbahnstruktur **13b** z.B. aus Silbertinte, einer die Leiterbahnstruktur 13b abdeckenden Abdeckfolie (Isolierung, Dielektrikum **13c** sowie den zwei Klebeschichten 13d aufgebaut. Statt wie gezeigt einlagig, kann die Bohrschutzfolie 13 auch mehrlagig ausgebildet sein. In diesem Fall ist auf der (inneren) Abdeckfolie 13c eine weitere Leiterbahnstruktur z.B. aus Silbertinte aufgebracht, die von einer weiteren, äußeren Abdeckfolie (Isolierung, Dielektrikum abgedeckt ist, d.h., zwischen der Abdeckfolie 13c und der Klebeschicht 13d sind die weitere Leiterbahnstruktur und die äußere Abdeckfolie angeordnet.

Der in **Fig. 4** im Detail gezeigte Fuß 15 der inneren Blechhaube 12 weist einen Anschlusskontakt **20** auf, hier lediglich beispielhaft in Form einer in der Standfläche des Fußes 15 ausgesparten Lasche, die nach unten über die Standfläche vorsteht. Die Standfläche des Fußes 15 weist weiterhin ein Befestigungsloch **21** auf. Der Fuß 14 der äußeren Blechhaube 22 weist ebenfalls ein Befestigungsloch **22**, das zusammen mit dem Befestigungsloch 21 ein durchgehendes Befestigungsloch ausbildet.

Wie in **Fig. 5** gezeigt, wird zunächst der Kontaktträger 5 auf eine Leiterplatte **23** aufgelötet. Die aus der Schutzhaube 10 hervorstehende Anschlussfahne 18 der Bohrschutzfolie 13 wird in einen Stecker des Kontaktträgers 5 eingesteckt und dann die Schutzhaube 10 über dem Kontaktträger 5 mit vier Schrauben, welche die Befestigungslöcher 21, 22 der Schutzhaube 10 sowie Befestigungslöcher **24** (**Fig. 6**) der Leiterplatte 23 durchgreifen, an der Leiterplatte 23 befestigt. Dabei kontaktiert der Anschlusskontakt 20 auf der Leiterplatte 23 eine freiliegende, elektrische Kontaktfläche **25**, die von einem Schutzring (Potenzialring, Guardring) **26** zum Schutz vor Kriechströmen umgeben sein. Um trotz der nach innen umgebogenen Anschlussfahne 18 sicherzustellen, dass die Schutzhaube 10 ringsum spaltfrei auf der Leiterplatte 23 anliegt, weist die Leiterplatte 23 eine Aussparung **27** für die darin umgebogene Anschlussfahne 18 auf (**Fig. 7**). Im Bereich der Aussparung 27 ist die äußere Blechhaube 11 bis auf den Grund der Aussparung 27 verlängert, um jeglichen Zugang ins Innere der Schutzhaube 10 zu verhindern.

Wenn zu Manipulationszwecken die Schutzhaube 10 von außen durchbohrt oder abgeschliffen wird, wird dadurch zwangsläufig ihre Bohrschutz-Leiterbahnstruktur 16 zerstört, über deren Leiterbahnen 17 im Betrieb ein Strom fließt, und folglich wird der bis dahin geschlossene Stromkreis unterbrochen. Dies wird von einer Überwachungseinheit (nicht gezeigt) der Leiterplatte 23 erkannt, die dann keinen Lesevorgang mehr zulässt bzw. die Kontaktiereinheit 6 außer Funktion setzt.

Wenn zu Manipulationszwecken die Schutzhaube 10 von der Leiterplatte 23 abgehoben wird, wird dadurch zwangsläufig der elektrische Kontakt zwischen dem Anschlusskontakt 20 der Schutzhaube 10 und der Kontaktfläche 25 der Leiterplatte 23 unterbrochen und folglich der bis dahin geschlossene Stromkreis unterbrochen. Auch dies wird von der Überwachungseinheit erkannt, die dann keinen Lesevorgang mehr zulässt bzw. die Kontaktiereinheit 6 außer Funktion setzt. Eine unbemerkte Manipulation am Kartenleser 1 ist somit nicht möglich, wodurch ein "sicherer Kartenleser (secure card reader)" bereitgestellt ist.

## Patentansprüche

1. Schutzhaube (10), insbesondere für einen Kartenleser (1),
wobei die Schutzhaube (10) eine Bohrschutzfolie (13) enthält, die eine flächendeckende Bohrschutz-Leiterbahnstruktur (16) mit mindestens einer durchgehenden Bohrschutz-Leiterbahn (17) aufweist,
**dadurch gekennzeichnet, dass**
die Schutzhaube (10) zwei ineinander gestapelte Blechhauben (11, 12) enthält,
wobei die Bohrschutzfolie (13) zwischen den beiden Blechhauben (11, 12) angeordnet ist, und
wobei die beiden Blechhauben (11, 12) und die Bohrschutzfolie (13) miteinander vollflächig zu einem Deckelverbund verklebt sind.

2. Schutzhaube nach Anspruch 1, **dadurch gekennzeichnet, dass** die Blechhauben (11, 12) jeweils als ein Tiefziehteil oder ein Blechbiegeteil ausgebildet sind.

3. Schutzhaube nach Anspruch 1 oder 2, **dadurch gekennzeichnet, dass** die Bohrschutzfolie (13) eine aus der Schutzhaube (10) hervorstehende Anschlussfahne (18) aufweist.

4. Schutzhaube nach einem der Ansprüche 1 bis 3, **dadurch gekennzeichnet, dass** die beiden Blechhauben (11, 12) jeweils Füße (14, 15) zur Befestigung auf einer Leiterplatte (23) aufweisen, wobei die Füße (14) der äußeren Blechhaube (11) die Füße (15) der inneren Blechhaube (12) jeweils vollständig übergreifen.

5. Schutzhaube nach einem der Ansprüche 1 bis 4, **dadurch gekennzeichnet, dass** die Schutzhaube (10) elektrische Anschlusskontakte (20) zur elektrischen Kontaktierung einer Leiterplatte (23) aufweist.

6. Schutzhaube nach Anspruch 4 und 5, **dadurch gekennzeichnet, dass** die Füße (15) der inneren Blechhaube (12) die elektrischen Anschlusskontakte (20) aufweist.

7. Schutzhaube nach Anspruch 6, **dadurch gekennzeichnet, dass** die Anschlusskontakte (20) durch Laschen gebildet sind, die in der Standfläche der Füße (15) ausgespart sind und über die Standfläche vorstehen.

8. Kartenleser (1) zum Datenaustausch mit einer Chipkarte (2), wobei der Kartenleser (1) aufweist:
eine Karteneinführöffnung (4),
eine Kontaktiereinheit (6) zum Datenaustausch mit einer durch die Karteneinführöffnung (4) in den Kartenleser (1) eingeführten Chipkarte (2) und
eine die Kontaktiereinheit (6) bis auf die Karteneinführöffnung (4) abdeckende Schutzhaube (10) nach einem der vorhergehenden Ansprüche.

9. Kartenleser nach Anspruch 8, **dadurch gekennzeichnet, dass** die Kontaktiereinheit (6) einen Kontaktträger (5) aufweist, mit dem eine aus der Schutzhaube (10) hervorstehende Anschlussfahne (18) der Bohrschutzfolie (13) elektrisch verbunden ist.

10. Kartenleser nach Anspruch 8 oder 9, **dadurch gekennzeichnet, dass** der Kartenleser (1) auf einer Leiterplatte (23) montiert ist und dass elektrische Anschlusskontakte (20) der Schutzhaube (10) von entsprechenden Gegenkontakten (25) der Leiterplatte (23) elektrisch kontaktiert sind.

## Claims

1. Protective hood (10), in particular for a card reader (1),
wherein the protective hood (10) contains an anti-drilling foil (13) which comprises an area-covering anti-drilling conductor track structure (16) with at least one continuous anti-drilling conductor track (17),
**characterized in that**
the protective hood (10) contains two sheet-metal hoods (11, 12) which are stacked one in the other,
wherein the anti-drilling foil (13) is arranged between the two sheet-metal hoods (11, 12), and
wherein the two sheet-metal hoods (11, 12) and the anti-drilling foil (13) are adhesively bonded to one another over their full surface area to form a composite cover.

2. Protective hood according to claim 1, **characterized in that** the sheet-metal hoods (11, 12) are each designed as a deep-drawn part or a bent sheet-metal part.

3. Protective hood according to claim 1 or 2, **characterized in that** the anti-drilling foil (13) has a connection lug (18) which projects out of the protective hood (10).

4. Protective hood according to one of claims 1 to 3, **characterized in that** the two sheet-metal hoods (11, 12) each have feet (14, 15) for fastening on a printed circuit board (23), wherein the feet (14) of the outer sheet-metal hood (11) engage in each case completely over the feet (15) of the inner sheet-metal hood (12).

5. Protective hood according to one of claims 1 to 4, **characterized in that** the protective hood (10) has electrical connection contacts (20) for making electrical contact with a printed circuit board (23).

6. Protective hood according to claims 4 and 5, **characterized in that** the feet (15) of the inner sheet-metal hood (12) have the electrical connection contacts (20).

7. Protective hood according to claim 6, **characterized in that** the connection contacts (20) are formed by tabs which are cut out from the standing surface of the feet (15) and project beyond the standing surface.

8. Card reader (1) for interchanging data with a chip card (2), the card reader (1) comprising:
a card insertion opening (4),
a contact-making unit (6) for interchanging data with a chip card (2) which is inserted into the card reader (1) through the card insertion opening (4), and
a protective hood (10) according to one of the preceding claims, which covers the contact-making unit (6) except for the card insertion opening (4).

9. Card reader according to claim 8, **characterized in that** the contact-making unit (6) has a contact carrier (5) which is electrically connected to a connection lug (18), which projects out of the protective hood (10), of the anti-drilling foil (13).

10. Card reader according to claim 8 or 9, **characterized in that** the card reader (1) is mounted on an printed circuit board (23), and **in that** electrical contact is made with electrical connection contacts (20) of the protective hood (10) by corresponding mating contacts (25) of the printed circuit board (23).

## Revendications

1. Capot de protection (10), en particulier destiné à un lecteur de carte (1),
le capot de protection (10) contenant un film anti-perçage (13) qui comporte une structure de pistes conductrices anti-perçage (16) qui couvre la surface et qui comporte au moins une piste conductrice anti-perçage continue (17),
**caractérisé en ce que**
le capot de protection (10) contient deux capots en tôle (11, 12) empilés l'un dans l'autre,
le film anti-perçage (13) étant disposé entre les deux capots en tôle (11, 12), et
les deux capots en tôle (11, 12) et le film anti-perçage (13) étant collés l'un à l'autre sur toute leur surface pour former un couvercle composite.

2. Capot de protection selon la revendication 1, **caractérisé en ce que** les capots en tôle (11, 12) sont conçus chacun sous la forme d'une pièce emboutie ou d'une pièce en tôle pliée.

3. Capot de protection selon la revendication 1 ou 2, **caractérisé en ce que** le film anti-perçage (13) comporte une patte de raccordement (18) faisant saillie du capot de protection (10).

4. Capot de protection selon l'une des revendications 1 à 3, **caractérisé en ce que** les deux capots en tôle (11, 12) comportent chacun des pieds (14, 15) destinés à la fixation sur une carte de circuit imprimé (23), les pieds (14) du capot en tôle extérieur (11) s'engageant chacun complètement par-dessus les pieds (15) du capot en tôle intérieur (12).

5. Capot de protection selon l'une des revendications 1 à 4, **caractérisé en ce que** le capot de protection (10) comporte des contacts de raccordement électriques (20) destinés au contact électrique avec une carte de circuit imprimé (23).

6. Capot de protection selon la revendication 4 et 5, **caractérisé en ce que** les pieds (15) du capot en tôle intérieur (12) comportent les contacts de raccordement électrique (20).

7. Capot de protection selon la revendication 6, **caractérisé en ce que** les contacts de raccordement (20) sont formés par des attaches qui sont évidées dans la surface de base des pieds (15) et qui font saillie de la surface de base.

8. Lecteur de carte {1) destiné à l'échange de données avec une carte à puce (2), le lecteur de carte {1) comportant:
une ouverture d'insertion de carte (4),
une unité de contact (6) destinée à l'échange de données avec une carte à puce (2) insérée dans le lecteur de carte (1) à travers l'ouverture d'insertion de carte (4) et
un capot de protection (10) selon l'une des revendications précédentes recouvrant l'unité de contact (6) à l'exception de l'ouverture d'insertion de carte (4) .

9. Lecteur de carte selon la revendication 8, **caractérisé en ce que** l'unité de contact (6) comporte un support de contact (5) auquel une patte de raccordement (18) du film anti-perçage (13) saillant du capot de protection (10) est reliée électriquement.

10. Lecteur de carte selon la revendication 8 ou 9, **caractérisé en ce que** le lecteur de carte (1) est monté sur une carte de circuit imprimé (23) et **en ce que** les contacts de raccordement électriques (20) du capot de protection (10) sont en contact électrique avec des contacts homologues correspondants (25) de la carte de circuit imprimé (23).
